# FASCICULE DE BREVET EUROPEEN

(11) **EP 1 986 003 B1**
(45) Date de publication et mention de la délivrance du brevet: **09.12.2015**
(21) Numéro de dépôt: 08154829.9
(22) Date de dépôt: 18.04.2008
(51) Int. Cl.: G01N 27/90, F01D 21/00

(54) **Procédé et installation de contrôle non destructif par courants de Foucault, à étalonnage automatique.**
Verfahren und Anlage zur nicht-destruktiven Kontrolle mit Hilfe von Wirbelströmen mit automatischer Eichung
Method and installation for non-destructive testing using Foucault currents, with automatic calibration.

(30) Priorité: 27.04.2007 FR 0754761
(43) Date de publication de la demande: 29.10.2008
(73) Titulaire: SNECMA, 75015 Paris (FR)
(72) Inventeur: Bousquet, Sadia, 77550, MOISSY CRAMAYEL (FR); Cabanis, Patrick, 77390, OZOUER LE VOULGIS (FR); Ravize, Luc, 64510, BORDES (FR); Robin, José Claude, 78960, VOISINS LE BRETONNEUX (FR)
(74) Mandataire: Intès, Didier Gérard André

(56) Documents cités:
- EP-A- 0 410 154
- EP-A- 1 452 863
- JP-A- 8 015 231
- US-B1- 6 608 478

## Description

L'invention concerne un procédé de contrôle non destructif par courants de Foucault d'un trou pratiqué dans une pièce métallique, pour détecter d'éventuels défauts présents à la surface de ce trou ou sous-jacent. On peut ainsi détecter des "criques" de fatigue. L'invention concerne aussi une installation de contrôle non destructif par courants de Foucault, notamment pour la mise en oeuvre du procédé.

Un domaine d'application privilégié de l'invention est celui du contrôle des trous de fixation d'un disque de turbomachine, par exemple dans un moteur d'avion.

Le contrôle non destructif par courants de Foucault consiste à déplacer un capteur électromagnétique (une bobine parcourue par un courant haute fréquence) au voisinage d'une pièce métallique à contrôler et à repérer les défauts (hétérogénéité ou cavité, notamment) en détectant une variation d'impédance du capteur, lorsqu'il passe au voisinage d'un tel défaut.

Un tel capteur doit être étalonné régulièrement à l'aide d'une pièce d'étalonnage de caractéristiques connues (par exemple ne comportant aucun défaut perceptible) percée d'un trou semblable à celui ou ceux qui doivent être contrôlés. Par "trou semblable", on entend un perçage ou une cavité de même forme et dimension. S'il s'agit d'une cavité, celle-ci n'est pas nécessairement fermée, comme par exemple la cavité d'un pied d'aube.

Plus précisément, pour les disques de rotor mentionnés ci-dessus, il est nécessaire de contrôler tous les trous de fixation de la façon indiquée ci-dessus, à l'issu de sa fabrication mais principalement au cours d'un contrôle de maintenance. II est connu d'utiliser une sonde à courants de Foucault porté par un système d'entraînement monté sur un support en matériau isolant. La sonde est installée à l'extrémité d'une tige entraînée à la fois en rotation et en translation selon son propre axe. Par exemple, la sonde peut comporter une extrémité arrondie (sphérique ou en forme d'olive) fendue pour présenter une certaine élasticité et incluant un capteur précité. L'élasticité garantit le contact entre la surface extérieure de la sonde et la surface intérieure du trou.

La sonde est installée à l'extrémité d'une tige entraînée à la fois en rotation et en translation selon son propre axe. Le système d'entraînement est monté sur un support que l'on vient positionner au-dessus de l'orifice d'un trou à contrôler et la sonde est engagée dans le trou pour explorer la totalité de la surface de ce dernier.

Pour l'étalonnage, un opérateur doit déplacer l'ensemble du support portant la sonde et ses moyens d'entraînement sur un socle spécifique portant la pièce d'étalonnage, afin de réaliser une exploration complète du trou de la pièce d'étalonnage.

Dans la pratique, l'étalonnage est renouvelé tous les dix trous, ce qui entraîne une perte de temps importante, de plus ce processus n'est pas totalement satisfaisant car il implique des interventions manuelles et un changement de référentiel qui nuisent à la précision et à la fiabilité de l'étalonnage.

EP 0 410 154 décrit un système d'inspection d'un alésage axial tel que celui d'un arbre de rotor qui permet de placer de façon répétitive des moyens de calibration selon le même axe que les moyens de mesure. Cependant, les moyens de calibration sont enlevés pour la mesure. Il en résulte une perte de temps et, à la longue, le positionnement des moyens de calibration peut se dérégler.

L'invention permet de surmonter ces inconvénients.

Plus précisément, l'invention concerne un procédé de contrôle non destructif par courants de Foucault d'un trou pratiqué dans une pièce métallique, du type consistant à engager une sonde à courants de Foucault dans ledit trou pour scruter sa surface intérieure, caractérisé en ce qu'il consiste à associer une pièce d'étalonnage à ladite pièce métallique, muni d'un trou semblable à celui qui doit être contrôlé, de façon que ledit trou de la pièce d'étalonnage et le trou à contrôler soient dans le prolongement l'un de l'autre, puis à engager la sonde successivement dans les deux trous pour recueillir des données d'étalonnage et des données à analyser au cours d'une même course de la sonde.

On rappelle que le procédé défini ci-dessus s'applique au contrôle par courants de Foucault de trous et cavités de différentes formes et pas seulement au contrôle de trous rectilignes à orifice circulaire. Le double mouvement de la sonde (rotation et translation combinées) peut être remplacé par un autre type de déplacement pour des trous de section complexe. Notamment, le mouvement donné à la sonde pour contrôler un même trou peut être constitué par une succession de brochages rectilignes en changeant chaque fois la génératrice du trou le long de laquelle on déplace la sonde.

Dans tous les cas, l'invention est remarquable par le fait qu'une phase d'exploration de la surface ou d'une partie de la surface du trou est systématiquement accompagnée d'un étalonnage ou au moins d'une possibilité d'étalonnage, réalisé automatiquement et sans changement de référentiel.

L'invention concerne également une installation de contrôle non destructif par courants de Foucault d'un trou pratiqué dans une pièce métallique, du type comportant une sonde à courants de Foucault portée par un système de déplacement de la sonde lui-même associé à une embase de positionnement munie de moyens d'indexage pour son positionnement sur ladite pièce de façon que la sonde puisse être introduite dans un trou à contrôler, caractérisée en ce que ladite embase de positionnement porte une pièce d'étalonnage comportant un trou semblable au trou à contrôler et en alignement avec un orifice de celui-ci, en sorte qu'une même course de ladite sonde permette de recueillir des données d'étalonnage et des données à analyser.

Avantageusement, l'embase de positionnement comporte un logement conformé et dimensionné pour accueillir une pièce d'étalonnage extractible et interchangeable. Cette pièce d'étalonnage métallique et réputée sans défaut peut donc être changée en fonction de la nature des trous ou cavités à contrôler.

L'invention sera mieux comprise et d'autres avantages de celle-ci apparaîtront clairement à la lumière de la description qui va suivre d'une installation de contrôle non destructif par courants de Foucault, conforme à son principe, donnée uniquement à titre d'exemple et faite en référence aux dessins annexés dans lesquels :
- la figure 1 est une vue générale en perspective éclatée de l'installation de contrôle conforme à l'invention ;
- la figure 2 est une vue d'une embase de positionnement incorporant une pièce d'étalonnage ;

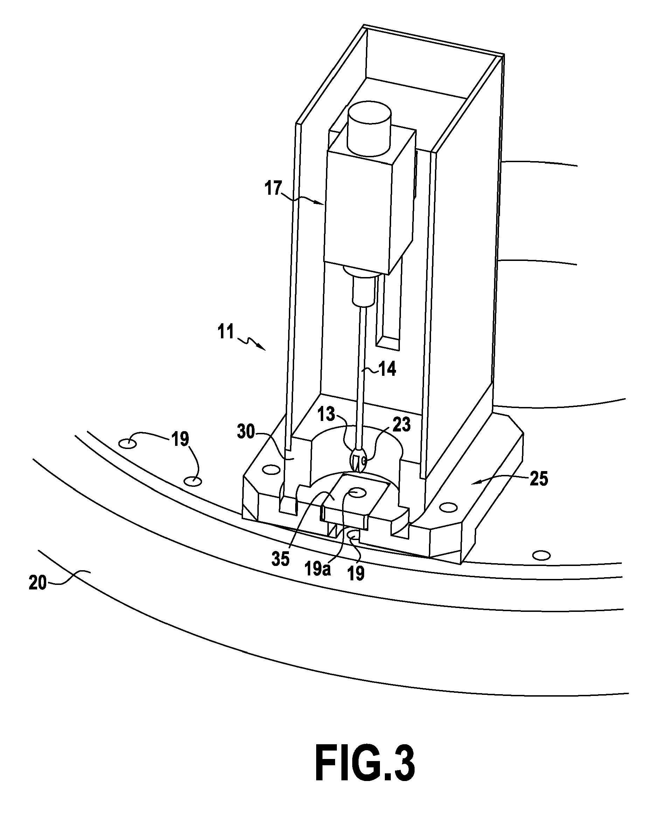

- la figure 3 illustre l'installation de contrôle en position ; et
- les figures 4 et 5 sont des vues schématiques illustrant le fonctionnement.

L'installation 11 représentée comporte une sonde à courants de Foucault 13 montée à l'extrémité d'une tige 14. La tige est associée à un système de déplacement motorisé 17 qui, dans cet exemple, confère à la sonde un double mouvement, rotatif autour de l'axe de la tige et translatif selon l'axe de la tige. Ce type de mouvement est bien adapté pour le contrôle d'un trou rectiligne à section circulaire, comme par exemple l'un des trous de fixation 19 d'un disque de turbomachine 20. L'exploration se fait à vitesse de rotation constante et à vitesse de progression rectiligne constante.

Comme indiqué précédemment, la sonde située à l'extrémité inférieure de la tige a approximativement la forme d'une sphère ou d'une olive. Elle est fendue dans un plan vertical. Au repos, le diamètre de la sonde est légèrement supérieur à celui du trou à contrôler. Par conséquent, dès que la sonde est introduite dans le trou, la fente se réduit légèrement et la surface extérieure de la sonde est en contact avec la surface intérieure du trou. Un capteur à courants de Foucault 23, essentiellement constitué d'une bobine, est intégré à cette sonde.

Le système de déplacement 17 de la sonde est lui-même associé à une embase de positionnement 25, munie de moyens de fixation à la pièce comportant le ou les trous à contrôler. Ces moyens de fixation comprennent des moyens d'indexage pour son positionnement précis sur la pièce de façon que la sonde puisse être introduite dans un trou à contrôler. Selon l'exemple, on voit que ces moyens d'indexage mettent à profit le fait que les trous 19 à contrôler sont disposés en couronne et régulièrement espacés. Lesdits moyens d'indexage sont donc constitués par des pions 27 portés par l'embase 25 et susceptibles d'être engagés dans les trous 19 voisins de celui qui doit être contrôlé. Par ailleurs, le socle 30 du système de déplacement 17 comporte une nervure courbe 31 qui vient se positionner dans une rainure 33 de même forme pratiquée à la surface supérieure de l'embase de positionnement 25.

Selon une caractéristique remarquable de l'invention, l'embase de positionnement 25 porte une pièce d'étalonnage 35 comportant un trou 19a semblable au trou 19 à contrôler. Lorsque l'embase 25 est en position sur la pièce 20, le trou 19a de la pièce d'étalonnage 35 se trouve en alignement avec un orifice d'un trou 19, à contrôler, de la pièce métallique. De cette façon, une même course de la sonde 13 permet de recueillir des données d'étalonnage et des données à analyser. Ainsi, grâce à l'invention, un étalonnage peut être réalisé pratiquement simultanément (ici légèrement avant) la prise des données représentatives de l'état du trou à contrôler.

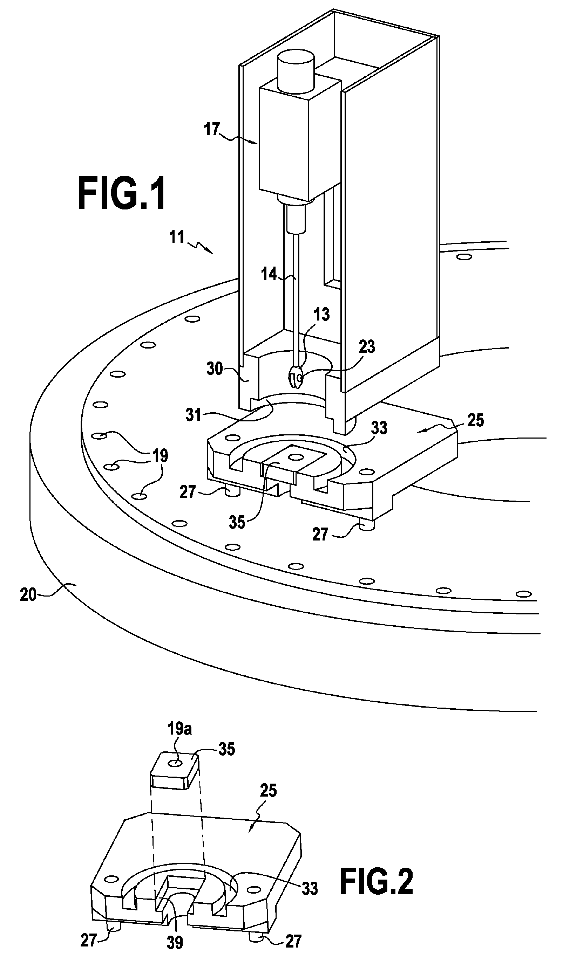

Comme on le voit sur la figure 2, l'embase de positionnement 25 comporte un logement 39 conformé et dimensionné pour accueillir la pièce d'étalonnage 35 qui est extractible et interchangeable. Cette pièce d'étalonnage se présente ici sous la forme d'une cale d'épaisseur donnée, du même métal que celui de la pièce à contrôler. L'embase de positionnement 25 est en matériau synthétique isolant.

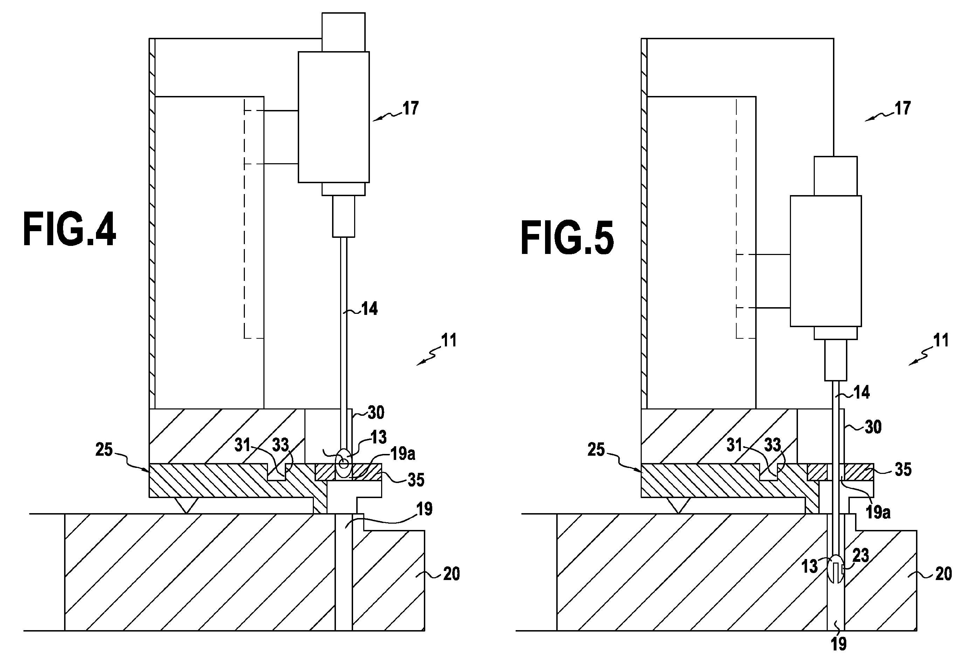

Avec l'installation de contrôle qui vient d'être décrite, le processus de contrôle consiste donc à superposer une pièce d'étalonnage à la pièce métallique. La pièce d'étalonnage est positionnée de façon que le trou 19a et l'un des trous à contrôler soient dans le prolongement l'un de l'autre et dans l'axe de la tige 14. Le contrôle consiste à engager la sonde 13 successivement dans les deux trous superposés (voir figures 4 et 5) pour recueillir des données d'étalonnage et des données à analyser, au cours d'une même course rectiligne et rotative de la sonde 13.

Dans le cas du contrôle d'un trou rectiligne à contour circulaire à l'aide d'une sonde conforme à la description qui précède, l'ensemble des données est recueilli au cours d'une seule course de la sonde.

Pour contrôler des trous ou cavités plus complexes, on peut procédé par une succession de brochages.

## Revendications

1. Procédé de contrôle non destructif par courants de Foucault d'un trou (19) pratiqué dans une pièce métallique, du type consistant à engager une sonde à courants de Foucault (13) dans ledit trou pour scruter sa surface intérieure, **caractérisé en ce qu'**il consiste à associer une pièce d'étalonnage (35) à ladite pièce métallique, munie d'un trou (19a) semblable à celui qui doit être contrôlé, de façon que ledit trou de la pièce d'étalonnage et le trou à contrôler soient dans le prolongement l'un de l'autre, puis à engager la sonde (13) successivement dans les deux trous pour recueillir des données d'étalonnage et des données à analyser au cours d'une même course de la sonde.

2. Procédé selon la revendication 1, **caractérisé en ce que**, pour le contrôle d'un trou rectiligne à section circulaire, on utilise une sonde (13) entraînée en rotation que l'on engage dans les deux trous superposés.

3. Procédé selon la revendication 2, **caractérisé en ce que** la vitesse de rotation et/ou la vitesse de progression de la sonde sont constantes.

4. Installation de contrôle non destructif par courants de Foucault d'un trou (19) pratiqué dans une pièce métallique, du type comportant une sonde à courants de Foucault (13) portée par un système de déplacement (17) de la sonde lui-même associé à une embase de positionnement (25) munie de moyens d'indexage pour son positionnement sur ladite pièce de façon que la sonde puisse être introduite dans un trou à contrôler, **caractérisée en ce que** l'installation comprend une pièce d'étalonnage (35) comportant un trou (19a) semblable au trou à contrôler et en alignement avec un orifice de celui-ci, et portée par ladite sonde permette de recueillir des données d'étalonnage et des données à analyser.

5. Installation selon la revendication 4, **caractérisé en ce que** ladite embase de positionnement (25) comporte un logement (39) conformé et dimensionné pour accueillir ladite pièce d'étalonnage (35) extractible et interchangeable.

## Patentansprüche

1. Verfahren zur zerstörungsfreien Wirbelstromprüfung eines Lochs (19), das in einem Metallteil ausgebildet ist, vom Typ, der darin besteht, eine Wirbelstromsonde (13) in das Loch einzuführen, um dessen Innenfläche abzutasten, **dadurch gekennzeichnet, dass** es darin besteht, dem Metallteil ein Kalibrierungsteil (35) zuzuordnen, das mit einem Loch (19a) ähnlich demjenigen, das geprüft werden soll, versehen ist, so dass das Loch des Kalibrierungsteils und das zu prüfende Loch in der Verlängerung voneinander liegen, anschließend die Sonde (13) nacheinander in die beiden Löcher einzuführen, um Kalibrierungsdaten und zu analysierende Daten im Laufe eines gleichen Hubs der Sonde zu sammeln.

2. Verfahren nach Anspruch 1, **dadurch gekennzeichnet, dass** für die Prüfung eines geradlinigen Lochs mit kreisförmigem Querschnitt eine drehangetriebene Sonde (13), die in die beiden übereinanderliegenden Löcher eingeführt wird, verwendet wird.

3. Verfahren nach Anspruch 2, **dadurch gekennzeichnet, dass** die Drehgeschwindigkeit und/oder die Fortschrittsgeschwindigkeit der Sonde konstant sind.

4. Anlage zur zerstörungsfreien Wirbelstromprüfung eines Lochs (19), das in einem Metallteil ausgebildet ist, vom Typ umfassend eine Wirbelstromsonde (13), die durch ein System zum Bewegen (17) der Sonde getragen ist, das selbst einem Positionierungssockel (25) zugeordnet ist, der mit Indexmitteln für sein Positionieren auf dem Teil versehen ist, so dass die Sonde in ein zu prüfendes Loch eingeführt werden kann, **dadurch gekennzeichnet, dass** die Anlage ein Kalibrierungsteil (35) umfasst, das ein Loch (19a), welches ähnlich dem zu prüfenden Loch ist und mit einer Öffnung dessen fluchtet, aufweist und durch den Positionierungssockel (25) getragen ist, so dass ein gleicher Hub der Sonde ermöglicht, Kalibrierungsdaten und zu analysierende Daten zu sammeln.

5. Anlage nach Anspruch 4, **dadurch gekennzeichnet, dass** der Positionierungssockel (25) eine Aufnahme (39) umfasst, die dazu ausgestaltet und bemessen ist, das herausnehmbare und auswechselbare Kalibrierungsteil (35) aufzunehmen.

## Claims

1. A method of using eddy currents for non-destructive inspection of a hole (19) formed in a metal part, the method being of the type that consists in engaging an eddy-current probe (13) in said hole in order to scan its inside surface, and being **characterized in that** it consists in associating a calibration part (35) with said metal part, the calibration part having a hole (19a) similar to that which is to be inspected, so that said hole in the calibration part and the hole for inspection are in line with each other, then in engaging the probe (13) successively in both of the holes in order to pick up both calibration data and data for analysis during a single stroke of the probe.

2. A method according to claim 1, **characterized in that** in order to inspect a rectilinear hole of circular section, a probe (13) is used that is driven in rotation and that is engaged in the two superposed holes.

3. A method according to claim 2, **characterized in that** the speed of rotation and/or the speed of advance of the probe is/are constant.

4. An installation for using eddy currents for non-destructive inspection of a hole (19) formed in a metal part, the installation being of the type comprising an eddy-current probe (13) carried by a probe drive system (17) itself associated with a positioning baseplate (25) provided with indexing means for positioning it on said part so that the probe can be introduced into a hole for inspection, **characterized in that** the installation comprises a calibration part (35) including a hole (19a) similar to the hole for inspection and in alignment with an orifice thereof and carried by said positioning baseplate (25), such that a single stroke of said probe serves to pick up both calibration data and data for analysis.

5. An installation according to claim 4, **characterized in that** said positioning baseplate (25) includes a housing (39) shaped and dimensioned to receive said extractable and interchangeable calibration part (35).
